(19) Europäisches Patentamt / European Patent Office / Office européen des brevets

(11) **EP 4 261 307 A1**

(12) **EUROPEAN PATENT APPLICATION**
published in accordance with Art. 153(4) EPC

(43) Date of publication:
**18.10.2023 Bulletin 2023/42**

(21) Application number: **21903749.6**

(22) Date of filing: **03.12.2021**

(51) International Patent Classification (IPC):
**C22C 38/02** (2006.01)   **C22C 38/04** (2006.01)
**C21D 9/46** (2006.01)   **C21D 8/02** (2006.01)

(52) Cooperative Patent Classification (CPC):
**C21D 8/02; C21D 9/46; C22C 38/02; C22C 38/04;**
**Y02T 30/00**

(86) International application number:
**PCT/KR2021/018200**

(87) International publication number:
**WO 2022/124703 (16.06.2022 Gazette 2022/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.12.2020 KR 20200172030**

(71) Applicant: **POSCO Co., Ltd**
**Pohang-si, Gyeongsangbuk-do 37859 (KR)**

(72) Inventors:
• **YANG, Hong-Seok**
  **Pohang-si, Gyeongsangbuk-do 37877 (KR)**
• **PAK, Jun-Hak**
  **Pohang-si, Gyeongsangbuk-do 37877 (KR)**
• **SEO, Seok-Jong**
  **Pohang-si, Gyeongsangbuk-do 37877 (KR)**

(74) Representative: **Meissner Bolte Partnerschaft
mbB
Patentanwälte Rechtsanwälte
Postfach 86 06 24
81633 München (DE)**

(54) **HOT-ROLLED STEEL SHEET FOR HYPER TUBE AND MANUFACTURING METHOD THEREFOR**

(57) Provided according an aspect of the present invention may be a hot-rolled steel sheet that is excellent in yield strength, vibration damping ration, and low-temperature toughness and thus has physical properties suitable for use in a hyper tube, and a manufacturing method therefor.

FIG. 1

EP 4 261 307 A1

**Description**

Technical Field

The present disclosure relates to a hot-rolled steel sheet and a manufacturing method thereof, and more particularly, to a hot-rolled steel sheet having properties suitable for hyper-tube trains due to excellent yield strength, vibration damping ratio and low-temperature toughness, and a manufacturing method thereof.

Background Art

A vacuum train, also known as a hyper-tube train, is a system in which a maglev train moves in a vacuum tube. The vacuum train may operate at high speed because there is no friction with air or tracks, which is the main cause of energy loss during train operations. Because energy loss is low, it is possible to save 93% of energy, as compared to aircraft, and it is in the limelight as an eco-friendly next-generation transportation means, so that active research is being conducted all over the world.

The structure and materials of vacuum tubes used in high-speed vacuum trains affect system performance or costs. Currently, there are three major materials being studied as tube materials for vacuum trains. One is concrete. Concrete tubes are advantageous in terms of cost, but it is difficult to connect individual tubes of about 10 m to each other. In addition, when a vacuum is implemented, there is a disadvantage in that the external gas may infiltrate into the inside of the tube and the vacuum is easily broken due to the pores inside the concrete. Another type of materials that have been studied a lot are composite materials such as carbon fiber. Composite materials such as carbon fiber are lightweight and have high performance, but high costs are considered the biggest disadvantage thereof.

Currently, the most promising material for vacuum train tubes is steel. Steel is a material that may be mass-produced at low cost. Steel has high stiffness and strength and is a material that is easy to process, is also a material easy to assemble or weld fittings between tubes or to tubes, and is also a material with an appropriate degassing rate when maintaining a vacuum. However, since the high-speed vacuum train runs at a significantly faster speed than the current high-speed train, the safety of passengers and surrounding facilities should be considered first. Currently, even safety standards for high-speed vacuum trains have not been established, and the development of materials for tubes to secure the safety of high-speed vacuum trains is also incomplete.

Therefore, there is an urgent need to develop a material for a vacuum train tube capable of securing safety while having processability and degassing rate suitable for a vacuum train tube.

(Prior Art Literature)

(Patent Document) Korean Patent Registration No. 10-2106353 (Notice May 04, 2020)

Summary of Invention

Technical Problem

According to an aspect of the present disclosure, it is possible to provide a hot-rolled steel sheet having properties suitable for use in vacuum train tubes due to excellent yield strength, vibration damping ratio, and low-temperature toughness, and a method of manufacturing the same.

The object of the present disclosure is not limited to the above. A person skilled in the art will have no difficulty in understanding the further subject matter of the present disclosure from the general content of this specification.

Solution to Problem

According to an aspect of the present disclosure, a hot-rolled steel sheet for a hyper-tube includes, in weight%, carbon (C): 0.15 to 0.25%, silicon (Si): 0.3 to 1.3%, manganese (Mn): 1.0 to 2.0%, a balance of Fe and other unavoidable impurities, has a ferrite and pearlite composite structure as a microstructure, and may satisfy the following Relational Expressions 1 to 3.

[Relational Expression 1]

$$350 \leq 11 + 394*D^{(-0.5)} + 448*[C] + 94*[Si] + 69*[Mn]$$

[Relational Expression 2]

$$100 \leq 186 - 210*D^{(-0.5)} - 121*[C] - 13.2*[Si] + 13.7*[Mn]$$

[Relational Expression 3]

$$303.78 - 85.22*\ln(D) > 27$$

In the Relational Expressions 1 to 3, D is the average ferrite grain size (pm) of the hot-rolled steel sheet, and [C], [Si], and [Mn] mean the contents (wt%) of carbon (C), silicon (Si), and manganese (Mn) in the hot-rolled steel sheet, respectively.

The microstructure of the hot-rolled steel sheet may consist of 60 to 90 area% of ferrite, 10 to 40 area% of pearlite and other unavoidable structures.

The content of titanium (Ti), niobium (Nb), and vanadium (V) unavoidably included in the hot-rolled steel sheet may be less than 0.01% (including 0%).

The average grain size (D) of the ferrite may be 10 to 30 pm.

The yield strength of the hot-rolled steel sheet may be 350 MPa or more, the Charpy impact energy of the hot-rolled steel sheet based on -20°C may be 27J or more, and a vibration damping ratio measured for a frequency of 1650 Hz in a flexural vibration mode after processing the hot-rolled steel sheet into a specimen having a length*width*thickness of 80*20*2 mm may be $100*10^{-6}$ or more.

The thickness of the hot-rolled steel sheet may be 10 mm or more.

According to an aspect of the present disclosure, a method of manufacturing a hot-rolled steel sheet for a hyper-tube includes, heating a slab containing, in weight%, carbon (C): 0.15 to 0.25%, silicon (Si): 0.3 to 1.3%, manganese (Mn): 1.0 to 2.0%, a balance of Fe and other unavoidable impurities, at a heating temperature ($T_1$) of 1100°C to 1300°C; hot-rolling the heated slab at a finishing delivery temperature ($T_2$) of 900°C to 1000°C to provide a hot-rolled steel sheet; and coiling the hot-rolled steel sheet at a coiling temperature ($T_3$) of 600°C to 700°C, wherein the heating temperature ($T_1$), the finishing delivery temperature ($T_2$), and the coiling temperature ($T_3$) may satisfy the following Relational Expression 4.

[Relational Expression 4]

$$1 \leq 0.0284*[T_1] + 0.071*[T_2] + 0.045*[T_3] - 131 \leq 3$$

In the Relational Expression 4, $[T_1]$, $[T_2]$ and $[T_3]$ mean the slab heating temperature ($T_1$,°C), finishing delivery temperature ($T_2$,°C) and coiling temperature ($T_3$,°C), respectively.

The content of titanium (Ti), niobium (Nb), and vanadium (V) unavoidably included in the slab may be less than 0.01% (including 0%).

The means for solving the above problems do not enumerate all the features of the present disclosure, and the various features of the present disclosure and the advantages and effects thereof will be understood in more detail with reference to the detailed embodiments and examples below.

Advantageous Effects of Invention

According to an aspect of the present disclosure, a hot-rolled steel sheet having excellent properties such as yield strength, vibration damping ratio, and low-temperature toughness suitable for a hyper-tube and a manufacturing method thereof may be provided.

The effect of the present disclosure is not limited to the above, and may be interpreted to include matters that may be reasonably inferred from the matters described in this specification by those skilled in the art.

Brief Description of Drawings

FIG. 1 is an optical microscope image used to observe the microstructure of specimen 1.
FIG. 2 is an optical microscope image used to observe the microstructure of specimen 5.

FIG. 3 is an optical microscope image of EN-S355, which is an existing structural steel.

Best Mode for Invention

The present disclosure relates to a hot-rolled steel sheet for a hyper-tube and a method of manufacturing the same. Hereinafter, preferred embodiments of the present disclosure will be described. Embodiments of the present disclosure may be modified in various forms, and the scope of the present disclosure should not be construed as being limited to the embodiments described below. These embodiments are provided to those skilled in the art to further elaborate the present disclosure.

A vacuum train is a train that runs inside a tube in a vacuum or sub-vacuum state, and is a next-generation transportation vehicle currently in the early stage of development. The vacuum train is a means of transportation that may effectively achieve high speed and high efficiency because it eliminates frictional resistance between wheels and tracks and minimizes air resistance. However, if the safety of the vacuum train is not sufficiently secured due to the nature of the vacuum train operating at high speed, there is a risk of big accident. In particular, not only when the vacuum tube is structurally damaged or collapsed, but also when a partial shape of the tube is deformed, a super-large catastrophe may occur. Therefore, a material for a tube for a vacuum train requires more stringent safety. As a result of in-depth research, the inventors of the present disclosure have found that the following physical properties are important as a material for a vacuum tube to secure the safety of a vacuum train.

The first physical property required of materials for vacuum tubes is high strength. Since the vacuum train moves through the inside of the vacuum tube, the material for the vacuum tube is required to have sufficient strength as a structure. In addition, since the inside of the vacuum tube must be maintained in a vacuum or sub-vacuum state, it is required to have sufficient high-strength characteristics so that the shape of the tube is not deformed due to a pressure difference between the inside and outside.

The second property required of materials for vacuum tubes is vibration damping ability. In the vacuum train, pods with several or dozens of people on board pass through the inside of the vacuum tube at intervals of several tens of seconds to several minutes. When a preceding pod passes and a subsequent pod passes, vibrations are amplified in the vacuum tube and resonance may occur, and in serious cases, the tube may be damaged. Therefore, when a material having a vibration damping ratio of a certain level or higher is applied to the vacuum tube, vibration in the tube after the preceding pod passes through may be effectively reduced, and the safety of the vacuum train may be effectively contributed.

The third property required for materials for vacuum tubes is low-temperature toughness. The vacuum train may also operate in polar regions or in deep waters. Since the steel material tends to be more easily damaged in a low-temperature or cryogenic environment, when the steel material is applied to a vacuum tube, it is required to have a certain level of low-temperature toughness to secure safety.

The inventor of the present disclosure, through in-depth research, recognized that it was possible to achieve both excellent yield strength, vibration damping ratio and low-temperature toughness by strictly controlling the alloy composition content and microstructure of the steel sheet, and derived the present disclosure.

Hereinafter, a hot-rolled steel sheet for a hyper-tube according to an aspect of the present disclosure will be described in more detail.

A hot-rolled steel sheet for a hyper-tube according to an aspect of the present disclosure includes, in weight%, carbon (C): 0.15 to 0.25%, silicon (Si): 0.3 to 1.3%, manganese (Mn): 1.0 to 2.0%, a balance of Fe and other unavoidable impurities, has a ferrite and pearlite composite structure as a microstructure, and may satisfy the following Relational Expressions 1 to 3.

[Relational Expression 1]

$$350 \leq 11 + 394*D^{(-0.5)} + 448*[C] + 94*[Si] + 69*[Mn]$$

[Relational Expression 2]

$$100 \leq 186 - 210*D^{(-0.5)} - 121*[C] - 13.2*[Si] + 13.7*[Mn]$$

[Relational Expression 3]

$$303.78 - 85.22*\ln(D) > 27$$

In the above Relational Expressions 1 to 3, D is the average ferrite grain size (pm) of the hot-rolled steel sheet, and [C], [Si] and [Mn] mean the contents (wt%) of carbon (C), silicon (Si), and manganese (Mn) in the hot-rolled steel sheet, respectively.

Hereinafter, the composition of the steel included in the hot-rolled steel sheet of the present disclosure will be described in more detail. Hereinafter, % representing the content of each element is based on weight unless otherwise indicated.

Carbon (C): 0.15 to 0.25%

Carbon (C) is a component that greatly affects the strength of a steel sheet. In the present disclosure, 0.15% or more of carbon (C) may be included in order to secure the strength required for the structure. On the other hand, if the content of carbon (C) is excessive, the toughness of the material is lowered, the weldability is lowered, and the yield ratio may be increased. A preferable lower limit of the carbon (C) content may be 0.17%, and a more preferable lower limit of the carbon (C) content may be 0.20%. In addition, if the carbon (C) content is excessive, since it is difficult to coarsen crystal grains, the present disclosure may limit the upper limit of the carbon (C) content to 0.25%. A preferable upper limit of the carbon (C) content may be 0.23%, and a more preferable upper limit of the carbon (C) content may be 0.22%.

Silicon (Si): 0.3 to 1.3%

Silicon (Si) oxygenates to form slag in the steelmaking stage and thus tends to be removed along with oxygen. In addition, silicon (Si) is also a component that effectively contributes to improving the strength of the material. Accordingly, the present disclosure may include 0.3% or more of silicon (Si) for this effect. A preferred lower limit of the silicon (Si) content may be 0.5%. On the other hand, if the content of silicon (Si) is excessive, surface descaling may be hindered and the surface quality of the product may deteriorate. In addition, if the content of silicon (Si) is excessive, the low-temperature toughness of the base material and the welded part is lowered, increasing the risk of fracture during use of the material, and thus, the present disclosure may limit the content of silicon (Si) to 1.3% or less. The preferable upper limit of the silicon (Si) content may be 1.0%.

Manganese (Mn): 1.0 to 2.0%

Manganese (Mn) is a component that improves strength and hardenability of steel. Therefore, the present disclosure may include 1.0% or more of manganese (Mn) in order to secure such an effect. On the other hand, if the content of manganese (Mn) is excessive, material deviation may occur due to central segregation, and crack propagation resistance may be inferior. A preferable lower limit of the manganese (Mn) content may be 1.2%, and a more preferable lower limit of the manganese (Mn) content may be 1.5%. In addition, if the content of manganese (Mn) is excessive, the toughness of the steel may be reduced, and therefore, in the present disclosure, the content of manganese (Mn) may be limited to 2.0% or less. A preferable upper limit of the manganese (Mn) content may be 1.8%, and a more preferable upper limit of the manganese (Mn) content may be 1.6%.

The hot-rolled steel sheet of the present disclosure may include remaining Fe and other unavoidable impurities in addition to the above-mentioned components. However, since unintended impurities from raw materials or the surrounding environment may inevitably be mixed in the normal manufacturing process, it cannot be entirely excluded. Since these impurities may be known to anyone skilled in the art, all of the contents are not specifically mentioned in the present specification. In addition, additional addition of effective ingredients other than the above-mentioned ingredients is not entirely excluded.

The hot-rolled steel sheet of the present disclosure actively suppresses the addition of titanium (Ti), niobium (Nb), and vanadium (V), and even if these components are unavoidably included, the total content may be limited to less than 0.01% (including 0%). Titanium (Ti), niobium (Nb), and vanadium (V) are representative precipitation strengthening elements, and are components that effectively contribute to improving the strength of steel by generating fine carbonitrides. However, since titanium (Ti), niobium (Nb), and vanadium (V) excessively refine the microstructure of the steel and adversely affect the vibration damping performance, in the present disclosure, these components are actively suppressed. In addition, titanium (Ti), niobium (Nb), and vanadium (V) are expensive components, and are not preferable in terms of economic efficiency. In the present disclosure, these components are not artificially added, and even when they are added inevitably, the total content of these components may be actively suppressed to less than 0.01%. A preferred total content of these components may be 0.005% or less, and a more preferred total content of these components may be 0%.

The hot-rolled steel sheet according to an aspect of the present disclosure may have a composite structure composed of ferrite and pearlite as a microstructure. The present disclosure may actively suppress the formation of low-temperature structures such as bainite, martensite and the like. Low-temperature structures such as bainite, martensite and the like have high strength and low yield ratio, and may thus exhibit excellent physical properties as structural materials. However, since the hot-rolled steel sheet for vacuum train tubes according to an example of the present disclosure is thick at a level of 10 mm or more, even if a low-temperature structure is introduced, physical property deviation may occur in the thickness direction of the steel sheet. This is because the low-temperature structure is formed only on the surface of the steel sheet, and it is difficult to sufficiently form the low-temperature structure to the center of the steel sheet.

Therefore, in the present disclosure, the microstructure of the steel sheet is composed of a composite structure composed of ferrite and pearlite in order to reduce the variation in physical properties, and even if the low-temperature structure such as bainite, martensite and the like is inevitably formed, the fraction thereof may be actively suppressed to 1 area% or less (including 0 %). The preferred fraction of the low-temperature structure may be less than 0.5 area %. In terms of securing physical properties, the fraction of ferrite may be 60 to 90 area%, and the fraction of pearlite may be 10 to 40% by area.

In order to simultaneously secure the required yield strength, vibration damping ratio and low-temperature toughness, the average grain size of ferrite may be limited to a certain range in the present disclosure. As the grain size increases, it is advantageous to secure a vibration damping ratio, and thus the average grain size of ferrite may be limited to 10 um or more in the present disclosure. A preferred average grain size may be greater than 10 $\mu$m, and a more preferred average grain size may be 15 pm or more. On the other hand, if the grain size is excessively large, the strength and low-temperature toughness of the material are inferior, and thus the average grain size of ferrite may be limited to 30 pm or less in the present disclosure. A preferred average grain size may be 25 pm or less.

The inventor of the present disclosure conducted in-depth research on methods for securing the stability of materials for vacuum train tubes, and as a result, when the content of carbon (C), silicon (Si), and manganese (Mn) and the average grain size of ferrite are controlled within a certain range in the low-alloy steel sheet as in the present disclosure, it was recognized that the yield strength, vibration damping ratio, and low-temperature toughness may be simultaneously secured, and the following Relational Expressions 1 to 3 were derived.

[Relational Expression 1]

$$350 \leq 11 + 394*D^{(-0.5)} + 448*[C] + 94*[Si] + 69*[Mn]$$

[Relational Expression 2]

$$100 \leq 186 - 210*D^{(-0.5)} - 121*[C] - 13.2*[Si] + 13.7*[Mn]$$

[Relational Expression 3]

$$303.78 - 85.22*\ln(D) > 27$$

In the Relational Expressions 1 to 3, D is the average ferrite grain size (pm) of the hot-rolled steel sheet, and [C], [Si] and [Mn] refer to the contents (wt%) of carbon (C), silicon (Si), and manganese (Mn) in the hot-rolled steel sheet, respectively.

Since the hot-rolled steel sheet for vacuum train tubes of the present disclosure satisfies all of the Relational Expressions 1 to 3, it is possible to simultaneously secure the required yield resistance, vibration damping ratio, and low-temperature toughness.

The hot-rolled steel sheet for vacuum train tubes of the present disclosure may have a yield strength of 350 MPa or more and a -20°C Charpy impact energy of 27 J or more. Therefore, the hot-rolled steel sheet for vacuum train tubes according to the present disclosure may secure strength and low-temperature toughness suitable as a structural material, effectively securing the structural safety of tubes for vacuum trains.

The hot-rolled steel sheet for a vacuum train tube according to the present disclosure may have a vibration damping ratio of $100*10^{-6}$ or more. In this case, the vibration damping ratio refers to a vibration damping ratio measured for a frequency of 1650 Hz after striking a specimen having a length * width * thickness of 80 * 20 * 2 mm in a flexural vibration mode. Since the hot-rolled steel sheet for vacuum train tubes of the present disclosure has a vibration damping ratio of $100*10^{-6}$ or more, it is possible to effectively suppress vibration amplification in the vacuum tube and effectively prevent damage to the tube for vacuum trains caused by vibrations.

Therefore, according to an aspect of the present disclosure, a hot-rolled steel sheet having physical properties suitable for a vacuum train tube due to excellent yield strength, vibration damping ratio, and low-temperature toughness may be provided.

Hereinafter, a method of manufacturing a hot-rolled steel sheet for a vacuum train tube according to an aspect of the present disclosure will be described in more detail.

A method of manufacturing a hot-rolled steel sheet for a vacuum train tube according to an aspect of the present disclosure includes heating a slab containing, in weight%, carbon (C): 0.15 to 0.25%, silicon (Si): 0.3 to 1.3%, manganese (Mn): 1.0 to 2.0%, the remainder Fe and other unavoidable impurities, at a heating temperature ($T_1$) of 1100°C to 1300°C; hot-rolling the heated slab at a finishing delivery temperature ($T_2$) of 900°C to 1000°C to provide a hot-rolled steel sheet; and coiling the hot-rolled steel sheet at a coiling temperature ($T_3$) of 600°C to 700°C, wherein the heating temperature ($T_1$), the finishing delivery temperature ($T_2$), and the coiling temperature ($T_3$) may satisfy the following Relational Expression 4.

[Relational Expression 4]

$$1 \leq 0.0284*[T_1] + 0.071*[T_2] + 0.045*[T_3] - 131 \leq 3$$

In the Relational Expression 4, $[T_1]$, $[T_2]$ and $[T_3]$ refer to the slab heating temperature ($T_1$,°C), finishing delivery temperature ($T_2$,°C) and coiling temperature ($T_3$,°C), respectively.

Preparation and Heating of Steel Slabs

A steel slab having a predetermined alloy composition is prepared. Since the steel slab of the present disclosure has an alloy composition corresponding to the above-mentioned hot-rolled steel sheet, the description of the alloy composition of the steel slab is replaced with the description of the alloy composition of the above-described hot-rolled steel sheet.

The prepared steel slab may be heated at a heating temperature ($T_1$) of 1100°C to 1300°C. Considering the rolling load during hot rolling, the steel slab may be heated in the temperature range of 1100°C or higher. In particular, since the present disclosure intends to introduce a microstructure of a certain size or more, a preferred heating temperature of the steel slab may be 1200°C or more. A more preferred steel slab heating temperature may be 1250°C or higher. On the other hand, if the steel slab heating temperature is excessively high, surface quality deterioration due to scale generation is concerned, so the present disclosure may limit the steel slab heating temperature to 1300°C or less.

Hot Rolling

A hot-rolled steel sheet may be provided by hot-rolling the heated steel slab at a finishing delivery temperature ($T_2$) of 900°C to 1000°C. The steel sheet provided by hot rolling of the present disclosure may have a thickness of 10 pm or more.

During hot rolling, the crystal grains are deformed as the material is rolled, but are recrystallized soon. Through this process, the coarse and non-uniform structure is refined and homogenized. An important process surface number during hot rolling is Finishing Delivery Temperature (FDT), which is the temperature at the end of rolling. This is because the grain size of the final microstructure and the like may be controlled according to the finishing delivery temperature. Since it is intended to control the final microstructure to a level of a certain size or higher in the present disclosure, hot rolling may be performed at a finishing delivery temperature of 900°C or higher. A preferred finishing delivery temperature may be 950°C or higher. On the other hand, if the finishing delivery temperature is excessively high, the final microstructure may be excessively coarse, and the present disclosure may limit the upper limit of the finishing delivery temperature to 1000°C.

Coiling

The hot-rolled steel sheet provided by hot rolling may be coiled at a coiling temperature ($T_3$) of 600°C to 700°C after undergoing water cooling. Since the present disclosure intends to implement a composite structure of ferrite and pearlite as a final structure, coiling may be performed in a temperature range of 600°C or higher. Since the present disclosure intends to implement a final microstructure of a certain size or more, coiling in a temperature range of 650°C or higher is more preferable. However, if the coiling temperature is excessively high, a coarse microstructure may be formed or the surface quality may be deteriorated, and thus, the upper limit of the coiling temperature may be limited to 700°C in the present disclosure.

The inventor of the present disclosure conducted in-depth research on technical means for controlling the grain size of the final microstructure, and confirmed that in order to control the grain size of the final microstructure in the component system of the present disclosure, the heating temperature ($T_1$) during heating of the steel slab, the finishing delivery temperature ($T_2$) during hot rolling, and the coiling temperature ($T_3$) during coiling of the hot-rolled steel sheet should be independently controlled to satisfy a certain range, and these slab heating temperature ($T_1$), finishing delivery temperature ($T_2$) and coiling temperature ($T_3$) should also be controlled within a certain range in connection with each other, and the following Relational Expression 4 was derived.

[Relational Expression 4]

$$*1241261 \leq 0.0284*[T_1] + 0.071*[T_2] + 0.045*[T_3] - 131$$

$$\leq 3$$

In the Relational Expression 4, $[T_1]$, $[T_2]$ and $[T_3]$ refer to the slab heating temperature ($T_1$, °C), finishing delivery temperature ($T_2$, °C) and coiling temperature ($T_3$, °C), respectively.

Therefore, in the method of manufacturing a hot-rolled steel sheet for a vacuum train tube according to an aspect of the present disclosure, the slab is heated at a heating temperature ($T_1$) of 1100°C to 1300°C, and is hot-rolled at a finishing delivery temperature ($T_2$) of 900°C to 1000°C, and the hot-rolled steel sheet is coiled at a coiling temperature ($T_3$) of 600°C to 700°C, and the process conditions are also controlled to satisfy Relational Expression 4 for the slab heating temperature ($T_1$), finishing delivery temperature ($T_2$) and coiling temperature ($T_3$), thereby effectively implementing the target microstructure of the hot-rolled steel sheet.

The hot-rolled steel sheet manufactured by the above manufacturing method may satisfy the following Relational Expressions 1 to 3.

[Relational Expression 1]

$$350 \leq 11 + 394*D^{(-0.5)} + 448*[C] + 94*[Si] + 69*[Mn]$$

[Relational Expression 2]

$$100 \leq 186 - 210*D^{(-0.5)} - 121*[C] - 13.2*[Si] + 13.7*[Mn]$$

[Relational Expression 3]

$$303.78 - 85.22*\ln(D) > 27$$

In the Relational Expressions 1 to 3, D is the average ferrite grain size (pm) of the hot-rolled steel sheet, and [C], [Si] and [Mn] refer to the contents (weight%) of carbon (C), silicon (Si) and manganese (Mn) of the hot-rolled steel sheet, respectively.

In addition, the hot-rolled steel sheet manufactured by the above-described manufacturing method not only has a yield strength of 350 MPa or more and a -20°C Charpy impact energy of 27 J or more, but also satisfies a vibration damping ratio of a level of $100*10^{-6}$ or more measured for a frequency of 1650 Hz in a flexural vibration mode by preparing a specimen having a length * width * thickness of 80 * 20 * 2 mm. may be satisfied.

Therefore, according to an aspect of the present disclosure, a method of manufacturing a hot-rolled steel sheet having physical properties suitable for a vacuum train tube due to excellent yield strength, vibration damping ratio, and low-temperature toughness may be provided.

Mode for Invention

Hereinafter, the hot-rolled steel sheet for a vacuum train tube of the present disclosure and the manufacturing method thereof will be described in more detail through detailed examples. It should be noted that the following examples are only for understanding of the present disclosure, and are not intended to specify the scope of the present disclosure. The scope of the present disclosure may be determined by the matters described in the claims and the matters reasonably inferred therefrom.

(Example)

After preparing a steel slab having a thickness of 250 mm provided with the alloy composition of Table 1 below, a hot-rolled steel sheet having a thickness of 15 mm was manufactured by applying the process conditions of Table 2. Alloy components not listed in Table 1 below refer to impurities and balance Fe, and "-" indicates a case close to 0 wt% within the error range.

[Table 1]

| Steel Grade | Alloy Composition (wt%) | | | | | |
|---|---|---|---|---|---|---|
| | C | Si | Mn | Ti | Nb | V |
| A | 0.2 | 1.0 | 1.5 | - | - | - |
| B | 0.22 | 0.5 | 1.6 | - | - | - |
| C | 0.15 | 0.5 | 1.0 | - | 0.045 | - |
| D | 0.15 | 2.0 | 1.8 | - | - | - |
| E | 0.1 | 0.5 | 1.5 | - | - | - |
| F | 0.3 | 1 | 1.5 | - | - | - |

[Table 2]

| Specimen No. | Steel Grade | Process Condition | | | Relational Expression 4 |
|---|---|---|---|---|---|
| | | Slab Heating Temperature ($T_1$, °C), | Finishing Delivery Temperature ($T_2$, °C) | Coiling Temperature ($T_3$, °C) | |
| 1 | A | 1250 | 950 | 650 | 1.2 |
| 2 | A | 1200 | 900 | 650 | -3.8 |
| 3 | A | 1300 | 1000 | 750 | 10.7 |
| 4 | B | 1200 | 950 | 680 | 1.1 |
| 5 | C | 1200 | 950 | 660 | 0.2 |
| 6 | D | 1250 | 960 | 670 | 2.8 |
| 7 | E | 1250 | 950 | 650 | 1.2 |
| 8 | F | 1250 | 950 | 650 | 1.2 |

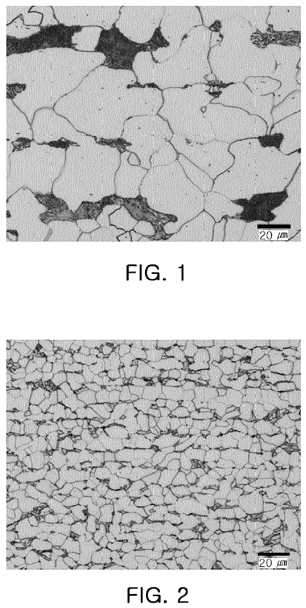

The microstructure and mechanical properties of each specimen were analyzed and listed in Table 3, and the satisfaction of Relational Expressions 1 to 3 of each specimen was also listed in Table 3. The microstructure was measured using an optical microscope at 500 magnification after etching each specimen by the Nital etching method. The grain size of ferrite was measured according to ASTM E112. FIG. 1 is an optical microscope photograph used to observe the microstructure of specimen 1, and FIG. 2 is an optical microscope photograph used to observe the microstructure of specimen 5.

Mechanical properties were measured according to KS B 0802 and KS B 0810, and the measured yield strength, yield ratio, and Charpy impact toughness at -21°C are listed in Table 3 together.

After preparing a specimen having a length * width * thickness of 80 * 20 * 2mm, the vibration damping ratio was measured at room temperature using IMCE's RFDA LTV800. After hitting in the flexural vibration mode, the vibration damping ratio in the 1650 Hz region corresponding to the 1st mode of the vibration modes of the specimen was measured and analyzed, and the results are illustrated in Table 3 together.

EP 4 261 307 A1

[Table 3]

| Specimen No. | Steel Grade | Micro-structure | Average grain size of Ferrite (D, $\mu$m) | Relational Expression 1 | Relational Expression 2 | Relational Expression 3 | Vibration Damping Ratio ($*10^{-6}$) | Yield Strength (MPa) | Charpy Energy (J, @-21°C) |
|---|---|---|---|---|---|---|---|---|---|
| 1 | A | F+P | 21 | 384.1 | 123.3 | 44.3 | 121 | 386 | 32 |
| 2 | A | F+P | 9 | 429.4 | 99.2 | 116.5 | 96 | 425 | 72 |
| 3 | A | F+P | 35 | 364.7 | 133.7 | 0.8 | 132 | 357 | 2 |
| 4 | B | F+P | 19 | 357.3 | 126.5 | 52.9 | 110 | 353 | 51 |
| 5 | C | F+P | 6 | 355.0 | 89.2 | 151.1 | 95 | 402 | 84 |
| 6 | D | F+P | 25 | 469.2 | 124.1 | 29.5 | 151 | 435 | 20 |
| 7 | E | F+P | 15 | 308.0 | 133.6 | 73.0 | 159 | 332 | 57 |
| 8 | F | F+P | 13 | 452.2 | 98.8 | 85.2 | 93 | 428 | 79 |

As illustrated in Tables 1 to 3, it can be seen that the specimens satisfying the alloy composition, process conditions and Relational Expressions 1 to 4 of the present disclosure simultaneously satisfy a yield strength of 350 MPa or more, a Charpy impact energy of -20°C of 27 J or more, and a vibration damping ratio of 100 * 10 [-6] or more, while the specimens that do not satisfy any one or more of the conditions limited by the present disclosure do not simultaneously satisfy the yield strength of 350 MPa or more, the Charpy impact energy of -20°C of 27 J or more, and the vibration damping ratio of 100*10 [-6] or more.

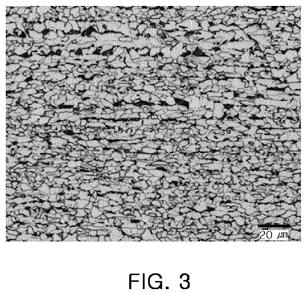

In addition, for comparison with conventional materials, tests were conducted on EN-S355, an existing structural steel, under the same conditions, and it could be confirmed that in the case of EN-S355, the vibration damping ratio measured under the same conditions was only a level of 60*10 [-6]. FIG. 3 is a microstructure observation picture of EN-S355 taken using an optical microscope.

Therefore, according to an aspect of the present disclosure, a hot-rolled steel sheet having excellent yield strength, vibration damping ratio, and low-temperature toughness and suitable for a vacuum train tube, and a manufacturing method thereof may be provided.

Although the present disclosure has been described in detail through examples above, other types of embodiments are also possible. Therefore, the spirit and scope of the claims set forth below are not limited to the examples.

**Claims**

1. A hot-rolled steel sheet for a hyper-tube, comprising:

   in weight %, carbon (C): 0.15 to 0.25%, silicon (Si): 0.3 to 1.3%, manganese (Mn): 1.0 to 2.0%, a balance of Fe and other unavoidable impurities,
   having a ferrite and pearlite composite structure as a microstructure, and
   satisfying the following Relational Expressions 1 to 3,

   [Relational Expression 1]

   $$350 \leq 11 + 394*D^{(-0.5)} + 448*[C] + 94*[Si] + 69*[Mn]$$

   [Relational Expression 2]

   $$100 \leq 186 - 210*D^{(-0.5)} - 121*[C] - 13.2*[Si] + 13.7*[Mn]$$

   [Relational Expression 3]

   $$303.78 - 85.22*\ln(D) > 27$$

   in the Relational Expressions 1 to 3, D is an average ferrite grain size (pm) of the hot-rolled steel sheet, and [C], [Si] and [Mn] mean contents (wt%) of carbon (C), silicon (Si), and manganese (Mn) in the hot-rolled steel sheet, respectively.

2. The hot-rolled steel sheet for a hyper-tube of claim 1, wherein the microstructure of the hot-rolled steel sheet is composed of 60 to 90 area% of ferrite, 10 to 40 area% of pearlite and other unavoidable structures.

3. The hot-rolled steel sheet for a hyper-tube of claim 1, wherein a content of titanium (Ti), niobium (Nb), and vanadium (V) unavoidably included in the hot-rolled steel sheet is less than 0.01% (including 0%).

4. The hot-rolled steel sheet for a hyper-tube of claim 1, wherein an average grain size (D) of the ferrite is 10 to 30 pm.

5. The hot-rolled steel sheet for a hyper-tube of claim 1, wherein a yield strength of the hot-rolled steel sheet is 350 MPa or more, a Charpy impact energy based on - 20°C of the hot-rolled steel sheet is 27 J or more, and a vibration damping ratio measured for a frequency of 1650Hz in a flexural vibration mode after processing the hot-rolled steel sheet into a specimen having a length * width * thickness of 80 * 20 * 2mm is 100*10 [-6] or more.

6. The hot-rolled steel sheet for a hyper-tube of claim 1, wherein a thickness of the hot-rolled steel sheet is 10 mm or more.

7. A method of manufacturing a hot-rolled steel sheet for a hyper-tube, comprising:

heating a slab containing, in weight%, carbon (C): 0.15 to 0.25%, silicon (Si): 0.3 to 1.3%, manganese (Mn): 1.0 to 2.0%, a balance of Fe and other unavoidable impurities, at a heating temperature ($T_1$) of 1100°C to 1300°C;
hot-rolling the heated slab at a finishing delivery temperature ($T_2$) of 900°C to 1000°C to provide the hot-rolled steel sheet; and
coiling the hot-rolled steel sheet at a coiling temperature ($T_3$) of 600°C to 700°C,
wherein the heating temperature ($T_1$), the finishing delivery temperature ($T_2$) and the coiling temperature ($T_3$) satisfy the following Relational Expression 4,

[Relational Expression 4]

$$1 \leq 0.0284*[T_1] + 0.071*[T_2] + 0.045*[T_3] - 131 \leq 3$$

in the Relational Expression 4, $[T_1]$, $[T_2]$ and $[T_3]$ mean a slab heating temperature ($T_1$, °C), a finishing delivery temperature ($T_2$, °C) and a coiling temperature ($T_3$, °C), respectively.

8. The method of manufacturing a hot-rolled steel sheet for a hyper-tube of claim 7, wherein a content of titanium (Ti), niobium (Nb) and vanadium (V) unavoidably included in the slab is less than 0.01% (including 0%).

FIG. 1

FIG. 2

FIG. 3

## INTERNATIONAL SEARCH REPORT

| International application No. |
| --- |
| **PCT/KR2021/018200** |

| | |
| --- | --- |
| **A.** | **CLASSIFICATION OF SUBJECT MATTER** |

C22C 38/02(2006.01)i; C22C 38/04(2006.01)i; C21D 9/46(2006.01)i; C21D 8/02(2006.01)i

According to International Patent Classification (IPC) or to both national classification and IPC

| | |
| --- | --- |
| **B.** | **FIELDS SEARCHED** |

Minimum documentation searched (classification system followed by classification symbols)

C22C 38/02(2006.01); B21B 1/26(2006.01); B21C 37/08(2006.01); C21D 8/02(2006.01); C22C 38/00(2006.01); C22C 38/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열연강판(hot rolled steel), 튜브(tube), 페라이트(ferrite), 펄라이트(pearlite), 결정립(grain)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2016-047956 A (JFE STEEL CORP.) 07 April 2016 (2016-04-07) <br> See paragraph [0018] and claims 1 and 3. | 1-8 |
| A | JP 2001-131704 A (KAWASAKI STEEL CORP.) 15 May 2001 (2001-05-15) <br> See paragraphs [0035]-[0036] and claims 1-4. | 1-8 |
| A | JP 2006-124773 A (SUMITOMO METAL IND. LTD.) 18 May 2006 (2006-05-18) <br> See claims 1-3. | 1-8 |
| A | JP 2009-174006 A (SUMITOMO METAL IND. LTD.) 06 August 2009 (2009-08-06) <br> See paragraph [0068] and claims 1-5. | 1-8 |
| A | JP 2001-131703 A (KAWASAKI STEEL CORP.) 15 May 2001 (2001-05-15) <br> See paragraph [0029] and claims 1-2. | 1-8 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 March 2022** | **11 March 2022** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/018200**

| Patent document cited in search report | | | Publication date (day/month/year) | Patent family member(s) | | | Publication date (day/month/year) |
|---|---|---|---|---|---|---|---|
| JP | 2016-047956 | A | 07 April 2016 | JP | 6197767 | B2 | 20 September 2017 |
| JP | 2001-131704 | A | 15 May 2001 | JP | 4345161 | B2 | 14 October 2009 |
| JP | 2006-124773 | A | 18 May 2006 | JP | 4438600 | B2 | 24 March 2010 |
| JP | 2009-174006 | A | 06 August 2009 | JP | 5142141 | B2 | 13 February 2013 |
| JP | 2001-131703 | A | 15 May 2001 | JP | 4345160 | B2 | 14 October 2009 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102106353